# EUROPEAN PATENT SPECIFICATION

(11) **EP 2 457 749 B1**
(45) Date of publication and mention of the grant of the patent: **18.12.2013**
(21) Application number: 11190216.9
(22) Date of filing: 23.11.2011
(51) Int. Cl.: B60C 19/00, B29D 30/06

(54) **Method for making a tire with foam noise damper and pneumatic tire**
Verfahren zur Herstellung eines Rreifens mit Schaumgeräuschdämpfer und Luftreifen
Procédé de fabrication de pneu avec amortisseur de bruit en mousse et pneu

(30) Priority: 24.11.2010 US 953577
(43) Date of publication of application: 30.05.2012
(73) Proprietor: The Goodyear Tire & Rubber Company, Akron, OH 44316-0001 (US)
(72) Inventor: Bormann, René Louis, L-7462 Moesdorf (LU); Agostini, Giorgio, L-7733 Colmar-Berg (LU); Majumdar, Ramendra Nath, Hudson, OH Ohio 44236 (US)
(74) Representative: Kutsch, Bernd

(56) References cited:
- EP-A1- 1 510 366
- EP-A1- 1 911 571
- EP-A1- 2 067 634
- EP-A1- 2 397 347
- EP-A2- 1 800 911
- DE-A1- 19 806 935
- US-A1- 2010 038 005

## Description

### Background of the Invention

Government regulations and consumer preferences continue to compel a reduction in the acceptable noise levels produced from the tires of passenger vehicles. One source of road noise is resonance within the air chamber enclosed by the innermost surface of the tire and the rim. One type of effort to reduce tire noise is damping the sound from the air vibration in the air chamber, which efforts have focused mainly on altering the innermost surface of the tire adjacent the tire carcass. Shortcomings in these previous efforts, as well as new stricter regulations regarding noise reduction, have provided a need for further improvements to the tire to reduce sound transmission due to vibrations within the air chamber.

DE-A- 198 06 935 describes a method for making a tire in accordance with the preamble of claim 1. Similar methods are also described in EP-A- 1911 571 and EP-A- 1800 911.

EP-A- 2 397 347, which is published only after the filing date of this application, describes a pneumatic tire comprising a foam noise damper comprising a silicone rubber foam having a specific gravity in a range of from 0.005 to 0.06.

### Summary of the Invention

The invention relates to a method in accordance with claim 1 and to a tire in accordance with claim 7.

Dependent claims refer to preferred embodiments of the invention.

In a preferred aspect of the invention, the pneumatic tire comprises two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; an innerliner disposed radially inward of the carcass, the innerliner having a surface exposed to an inner cavity of the tire; and a foamed noise damper disposed on the surface of the innerliner.

### Brief Description of the Drawings

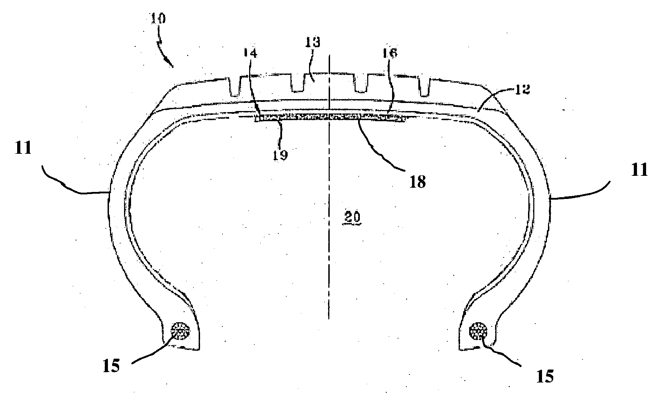

The invention will be more readily understood with respect to the accompanying drawing wherein:
The sole drawing is a cross-sectional view of an embodiment of a tire having a foamed noise damper according to the present invention.

### Definitions

"Carcass" means the tire structure apart from the belt structure, tread, undertread, beads and sidewall rubber over the plies.

"Innerliner" means the layer or layers of elastomer or other material that form the inside surface of a tire and that contain the inflating fluid within the tire. The "innerliner" of a tube-type tire is often called a "squeegee" to distinguish it from the innerliner of a tubeless tire.

"Pneumatic tire" means a laminated mechanical device of generally toroidal shape (usually an open torus) having beads and a tread and made of rubber, chemicals, fabric and steel or other materials. When mounted on the wheel of a motor vehicle, the tire through its tread provides traction and contains the fluid that sustains the vehicle load.

"Tread" means a molded rubber component which, when bonded to a tire casing, includes that portion of the tire that comes into contact with the road when the tire is normally inflated and under normal load, i.e., the footprint.

"Equatorial plane (EP)" means the plane perpendicular to the tire's axis of rotation and passing through the center of its tread.

The terms "cure" and "vulcanize" are intended to be interchangeable terms unless otherwise noted.

The terms "green" and "uncured" are intended to be interchangeable unless otherwise noted.

### Description of the Invention

In accordance with the present invention, there is provided a method for making a tire having a foam noise damper according to claim 1, comprising the steps of: obtaining a tire having an innerliner, the innerliner having a surface facing an interior cavity of the tire; applying a foamable liquid to the surface; and foaming the foamable liquid to form a solid foam noise damper secured to the tire innerliner.

There is further provided a pneumatic tire according to claim 7 comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; an innerliner disposed radially inward of the carcass, the innerliner having a surface exposed to an inner cavity of the tire; and a foamed noise damper disposed on the surface of the innerliner; the foamed noise damper comprising a silicone rubber foam having a specific gravity in a range of from 0.01 to 0.4.

By disposing a certain volume of the foam material in the tire cavity, resonances of the air in the cavity can be controlled and vibrations of the tread portion are reduced. Therefore, noise generated from the tire during running can be reduced. In particular, reduction of noise due to tire cavity resonance measured at a frequency of 200 to 300 Hz is desirable.

The foam noise damper has a specific gravity and dimensions suitable to reduce noise level due to tire cavity resonance at 200 to 300 Hz. In one embodiment, the foam has a specific gravity greater in a range of 0.01 to 0.4 (100 to 400 kg/m3). In one embodiment, the foam noise damper has a thickness in the tire radial direction ranging from 10 to 50 mm. In one embodiment, the foam noise damper has a width in the axial tire direction ranging from 30 to 150 mm. In one embodiment, the foam noise damper is disposed circumferentially about the tire.

The foam noise damper is formed and secured to the surface of the tire innerliner by foaming in place a foamable liquid precursor material. By foaming in place, it is meant that the foamable liquid precursor is applied to the surface of the tire innerliner as a liquid, and allowed to foam and cure while in contact with the surface of the tire innerliner.

In so doing, the method avoids prior art methods of applying a pre-made foam to the innerliner with an adhesive or other attachment method.

Precursor foamable liquids capable of forming foams including synthetic resin foams such as ether based polyurethane foam, ester based polyurethane foam, polyethylene foam and the like; rubber foams such as chloroprene rubber foam, ethylene-propylene rubber foam, nitrile rubber foam, silicone rubber foam and the like are suitable. Foamable liquids as known in the art, including various reactive monomers, blowing agents, and curatives, are suitable.

In one embodiment, the foamable liquid is a silicone rubber foam precursor and the foam noise damper is a silicone rubber foam noise damper. In one embodiment, the foamable liquid is an RTV (room temperature vulcanizable) silicone foam precursor. In one embodiment, the foamable liquid is a two-part RTV (RTV-2) silicone foam precursor. Suitable silicone foams may be produced by methods as are known in the art, as disclosed for example in US-A- 4,851,452 and US-A- 6,022,904. Suitable silicone foam rubber precursors are available commercially, for example as Elastocil® from Wacker Silicones, including Elastocil® SC 890 A/B.

The foamed noise damper can be disposed in various inner portions of the tire. For example it can extend from bead to bead for coverage of the innerliner spanning both the tread and sidewall portions of the tire or it can simply be selectively and locally disposed on the innerliner surface of the tire. In one embodiment, the foamed noise damper is disposed on the innerliner surface circumferentially and bisected by the equatorial plane of the tire.

The foamed noise damper of the tire is of such a gauge as to not occupy any substantial inner portion of the inflated tire. Generally, its thickness ranges from 1 to 80 and preferably 10 to 50 percent of the total tire thickness, depending somewhat upon the tire size and intended use of the tire with its structured volume being less than 25 percent, preferably less than 10 percent, of the encompassed volume of air in the pneumatic tire. Thus, a typical thickness is in the range of 10 to 30 percent of the total tire thickness for an ordinary passenger pneumatic tire with its volume being less than 10 percent of the encompassed volume of air in the pneumatic tire.

In order to obtain an adequate noise dampening effect by the foamed noise damper in the tire, the foamed noise damper has a density or density and porosity in ranges suitable to dampen noise.

In one embodiment, the foamed noise damper has a specific gravity ranging from 0.01 to 0.4. In another embodiment, the foamed noise damper has a density ranging from 0.1 to 0.4. In another embodiment, the foamed noise damper has a density ranging from 0.15 to 0.25 g/cm³.

The foamable liquid may be applied to the surface of the tire innerliner using various methods as are known in the art, including but not limited to spraying, brushing, rolling, wiping, and the like. In one embodiment, the foamable liquid is applied to the surface of the tire innerliner by spraying.

The foamable liquid may be applied to the surface of the tire innerliner as a freely formed body, i.e., without constraint of a mold, or the foamable liquid may be applied with the use of a removable mold to impart a desired cross-sectional area to the resulting foam noise damper. In one embodiment, a mold in utilized to impart a rectangular cross sectional area to the foam noise damper.

The foamable liquid may be applied in one continuous circumferential motion, to avoid breaks in the foam noise damper. The continuous motion may be achieved for example during spraying by movement of a movable spray head, or by rotation of the tire on a rotating support.

An advantage to application of the foam noise damper from a foamable liquid is the resulting absence of a splice in the foam noise damper. Such a splice, or overlap, is typically observed in foam noise dampers applied to a tire as prefoamed solid foam. The splice may undesirably provide a source of a separation of the foam from the innerliner during use. In one embodiment, then, the solid foam noise damper is exclusive of a splice.

In one embodiment, the foamable liquid is applied to the innerliner of a green, or uncured, tire. One advantage of such an application is good adhesion of the foamed noise damper to the tire innerliner. In the case of application to a cured tire, the presence of residual silicone release agent (used to facilitate release the tire from a curing mold) on the surface of the innerliner can interfere with adhesion of the foam to the innerliner. By contrast, application of the foamable liquid to the green innerliner of a green tire avoids such negative influence of release agents.

Whether the foamable liquid is applied to a green tire or cured tire, to ensure adhesion of the silicone rubber foam to the innerliner use of an adhesive is necessary. The adhesive is applied to the innerliner prior to application of the silicone rubber foam. In one embodiment, the adhesive is an acrylic adhesive. Suitable acrylic adhesive is available commercially as 6038 adhesive transfer tape from 3M.

It is readily understood by those having skill in the art that the rubber compositions used in the vulcanized rubber tire can be of various cured or vulcanized rubbers such as natural rubber and synthetic rubber and their mixtures or blends. For example, they can be rubbery styrene-butadiene copolymers, butadiene-acrylonitrile copolymers, cis-1,4-polyisoprene, polybutadiene, isoprene-butadiene copolymers, butyl rubber, halogenated butyl rubber such as chloro or bromo butyl rubber, ethylene-propylene copolymers, ethylene-propylene-diene terpolymers and polyurethane elastomers. Typically the various polymers are cured or vulcanized by normal curing methods and recipes such as with sulfur, or with peroxides in the case of the ethylene-propylene copolymers, or with primary diamines in the case of polyurethane elastomers. The sulfur cured or vulcanized natural rubber and synthetic rubbery polymers are preferred such as styrene-butadiene rubber, cis-1,4-polyisoprene, polybutadiene, butyl rubber, chlorobutyl rubber, and bromobutyl rubber.

It is further understood by those having skill in the art that the rubber compositions used components other than the noise damper in the tire would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives.

Typical additions of carbon black comprise 20 to 200 parts by weight per 100 parts by weight of diene rubber (phr), preferably 50 to 100 phr.

A number of commercially available carbon blacks may be used. Included in the list of carbon blacks are those known under the ASTM designations N299, S315, N326, N330, M332, N339, N343, N347, N351, N358, N375, N539, N550 and N582. Processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 80 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr, or even, in some circumstances, up to 8 phr, with a range of from 3 to 5 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods, which will be readily apparent to those having skill in such art.

Referring now to the drawing it is shown that a pneumatic rubber tire can be prepared by building an unshaped and unvulcanized basic tire 10 containing what are to become the customary tread portion 13, sidewalls 11, beads 15 and carcass 12, which typically contains plies (not shown) to back and reinforce the tread and sidewall portions, and particularly a foamed noise damper 18. The green tire 10 has the foamed noise damper 18 in place, after application, foaming and cure of a foamable liquid. The green tire is then placed in a mold where it is shaped, molded and heated under pressure to vulcanize the tire.

In the embodiment as shown in the drawing, the tire 10 includes innerliner layer 16 disposed adjacent the carcass 12 and foamed noise damper 18 disposed on the surface 14 of innerliner 16 and forming the innermost surface 19, with foamed noise damper 18 bisected by equatorial plane 20 and extending circumferentially and axially over less than the full width of the tread 13.

Thus, in one embodiment the foamed noise damper may extend circumferentially about the inside of the tire and axially from bead to bead. In another embodiment, the foamed noise damper may extend circumferentially about the inside of the tire and only partially across the width of the tire. In one embodiment, the foamed noise damper may extend axially no more than 50 percent of the tread width. In another embodiment, the foamed noise damper may extend axially in a range of from 10 percent to 50 percent of the tread width. In another embodiment, the foamed noise damper may be substantially centered axially on the axial centerline of the tire. In another embodiment, multiple circumferential foamed structures may be used, disposed so as to equalize the load on the tire and maintain dynamic balance.

## Claims

1. A method for making a tire having a foam noise damper (18), the method comprising the steps of:
obtaining a tire (10) having an innerliner (16), the innerliner (16) having a surface (14) facing an interior cavity of the tire (10);
applying a foamable liquid to the surface (14); and
foaming the foamable liquid to form a solid foam noise damper (18) secured to the innerliner (16), **characterized in that**
the foamable liquid is a silicone rubber foam precursor and the foam noise damper (18) is a silicone rubber foam noise damper having a specific gravity ranging from 0.15 to 0.25, and **in that** the solid foam noise damper (18) is exclusive of a splice.

2. The method of claim 1 further comprising the step of:
applying an adhesive to the surface (14) prior to disposing the foamable liquid to the surface (14), wherein the adhesive is between the foamable liquid and the surface (14).

3. The method of claim 1 wherein the foamable liquid is an RTV silicone foam precursor.

4. The method of claim 1 or 3 wherein the foamable liquid is a two-part RTV (RTV-2) silicone foam precursor.

5. The method of at least one of the previous claims wherein the tire (10) is an uncured green tire and the innerliner (16) is a green uncured innerliner.

6. The method of claim 1 wherein the step of applying a foamable liquid to the surface (14) comprises applying the foamable liquid in a continuous circumferential motion.

7. A pneumatic tire comprising a carcass (12) comprising an innerliner (16) on the radially inner side of the carcass (12), the innerliner (16) having a surface (14) exposed to an inner cavity of the tire (10), and a foam noise damper (18) disposed on the surface (14) of the innerliner (16), the foam noise damper (18) comprising a silicone rubber foam having a specific gravity in a range of from 0.01 to 0.4, wherein the foam noise damper (18)
(i) further has a specific gravity ranging from 0.15 to 0.25; and/or
(ii) is exclusive of a splice.

## Patentansprüche

1. Verfahren zur Herstellung eines Reifens, der einen Schaumstoff-Geräuschdämpfer (18) aufweist, wobei das Verfahren die folgenden Schritte umfasst:
Erhalten eines Reifens (10) mit einer Innenisolierung (16), wobei die Innenisolierung (16) eine Oberfläche (14) aufweist, die einem Innenhohlraum des Reifens (10) zugewandt ist;
Anbringen einer aufschäumbaren Flüssigkeit an der Oberfläche (14); und
Aufschäumen der aufschäumbaren Flüssigkeit zur Bildung eines an der Innenisolierung (16) gesicherten Hartschaumstoff-Geräuschdämpfers (18), **dadurch gekennzeichnet, dass**
die aufschäumbare Flüssigkeit ein Silikonkautschukschaumstoff-Vorläufer ist und der Schaumstoff-Geräuschdämpfer (18) ein Silikonkautschukschaumstoff-Geräuschdämpfer ist, der ein spezifisches Gewicht im Bereich von 0,15 bis 0,25 hat, und dadurch, dass der Hartschaumstoff-Geräuschdämpfer (18) unter Ausschluss eines Spleißes ist.

2. Verfahren nach Anspruch 1, weiter den folgenden Schritt umfassend:
Anbringen eines Klebstoffs an der Oberfläche (14) vor dem Anbringen der aufschäumbaren Flüssigkeit an der Oberfläche (14), wobei der Klebstoff sich zwischen der aufschäumbaren Flüssigkeit und der Oberfläche (14) befindet.

3. Verfahren nach Anspruch 1, wobei die aufschäumbare Flüssigkeit ein RTV-Silikonschaumstoffvorläufer ist.

4. Verfahren nach Anspruch 1 oder 3, wobei die aufschäumbare Flüssigkeit ein Zweikomponenten-RTV (RTV-2)-Silikonschaumstoffvorläufer ist.

5. Verfahren nach mindestens einem der vorgenannten Ansprüche, wobei der Reifen (10) ein unvulkanisierter Reifenrohling ist und die Innenisolierung (16) ein unvulkanisierter Innenisolierungsrohling ist.

6. Verfahren nach Anspruch 1, wobei der Schritt des Anbringens einer aufschäumbaren Flüssigkeit an der Oberfläche (14) das Anbringen der aufschäumbaren Flüssigkeit in einer kontinuierlichen umfangsgerichteten Bewegung umfasst.

7. Luftreifen, umfassend eine Karkasse (12), die eine Innenisolierung (16) an der radial inneren Seite der Karkasse (12) umfasst, wobei die Innenisolierung (16) eine zu einem Innenhohlraum des Reifens (10) hin freiliegende Oberfläche (14) und einen auf der Oberfläche (14) der Innenisolierung (16) angeordneten Schaumstoff-Geräuschdämpfer (18) aufweist, wobei der Schaumstoff-Geräuschdämpfer (18) einen Silikonkautschukschaumstoff umfasst, der ein spezifisches Gewicht in einem Bereich von 0,01 bis 0,4 aufweist, wobei der Schaumstoff-Geräuschdämpfer (18)
(i) weiter ein spezifisches Gewicht in einem Bereich von 0,15 bis 0,25 aufweist; und/oder
(ii) unter Ausschluss eines Spleißes ist.

## Revendications

1. Procédé pour confectionner un bandage pneumatique possédant un amortisseur des bruits en mousse (18), le procédé comprenant les étapes consistant à :
obtenir un bandage pneumatique (10) possédant un calandrage intérieur (16), le calandrage intérieur (16) possédant une surface (14) orientée vers la cavité interne du bandage pneumatique (10) ;
appliquer sur la surface (14) un liquide apte à se transformer en mousse ; et
transformer en mousse le liquide apte à se transformer en mousse pour obtenir un amortisseur solide des bruits en mousse (18) fixé au calandrage intérieur (16), **caractérisé en ce que**
le liquide apte à se transformer en mousse est un précurseur de mousse de caoutchouc silicone et l'amortisseur des bruits en mousse (18) est un amortisseur des bruits en mousse à base de caoutchouc silicone possédant une densité relative qui se situe dans la plage de 0,15 à 0,25, et **en ce que** l'amortisseur solide des bruits en mousse (18) ne contient pas de joint en coupe biaisée.

2. Procédé selon la revendication 1, comprenant en outre l'étape consistant à :
appliquer un adhésif sur la surface (14) avant de disposer sur la surface (14) le liquide apte à se transformer en mousse, l'adhésif étant disposé entre le liquide apte à se transformer en mousse et la surface (14).

3. Procédé selon la revendication 1, dans lequel le liquide apte à se transformer en mousse est un précurseur de mousse de silicone résistant aux variations de température (RTV).

4. Procédé selon la revendication 1 ou 3, dans lequel le liquide apte à se transformer en mousse est un précurseur en deux parties de mousse de silicone résistant aux variations de température (RTV-2).

5. Procédé selon au moins une des revendications précédentes, dans lequel le bandage pneumatique (10) est un bandage pneumatique non vulcanisé à l'état cru et le calandrage intérieur (16) est un calandrage intérieur non vulcanisé à l'état cru.

6. Procédé selon la revendication 1, dans lequel l'étape d'application sur la surface (14) d'un liquide apte à se transformer en mousse comprend le fait d'appliquer le liquide apte à se transformer en mousse dans un mouvement circonférentiel continu.

7. Bandage pneumatique comprenant une carcasse (12) comprenant un calandrage intérieur (16) sur le côté interne de la carcasse (12) en direction radiale, le calandrage intérieur (16) possédant une surface (14) exposée en direction de la cavité interne du bandage pneumatique (10), et un amortisseur des bruits en mousse (18) disposé sur la surface (14) du calandrage intérieur (16), l'amortisseur des bruits en mousse (18) comprenant une mousse à base de caoutchouc silicone possédant une densité relative dans la plage de 0,01 à 0,4, dans lequel l'amortisseur solide des bruits en mousse (18) :
(i) possède en outre une densité relative qui se situe dans la plage de 0,15 à 0,25 ; et/ou
(ii) ne contient pas de joint en coupe biaisée.
